# EUROPÄISCHE PATENTANMELDUNG

(11) **EP 1 109 273 A2**
(43) Veröffentlichungstag der Anmeldung: **20.06.2001**
(21) Anmeldenummer: 00123794.0
(22) Anmeldetag: 02.11.2000
(51) Int. Cl.: H01R 43/00

(54) **Verfahren zum Abdichten von Steckverbindungselementen elektrischer Leitungssysteme beim Einschäumen in Bauteile und dabei einzusetzende Vorrichtungen**

(30) Priorität: 18.12.1999 DE 19961233
(71) Anmelder: Meritor Automotive GmbH, 60314 Frankfurt (DE)
(72) Erfinder: Drewniok, Daniel, 60385 Frankfurt (DE); Schroeder, Andreas, 55278 Mommenheim (DE)
(74) Vertreter: Beil, Hans Christoph, Dr.

(57) **Zusammenfassung**

Verfahren zum Abdichten von in Bauteilen einzuschäumenden Steckverbindungselementen elektrischer Leitungssysteme beim Einschäumen, bei dem die Eintrittsstelle der elektrischen Zuleitung in das Steckverbindungselement unter dem Druck des einzubringenden Schaums durch ein Verschlußteil abgedichtet wird. Das Verschlußteil besteht aus einem elastisch verformbaren Material und hat entweder gegeneinander liegende, die Zuleitung umfassende Lippen oder weist eine mit der sich nach außen erweiternden Öffnung des Steckverbindungselements zur Aufnahme der Zuleitung korrespondierende Form auf.

## Beschreibung

Gegenstand der Erfindung ist ein Verfahren mit den Merkmalen des Anspruch 1 sowie eine dafür einzusetzende Vorrichtung mit den Merkmalen des Anspruchs 4.

Will man Leitungssysteme in Bauteile, wie beispielsweise die Türmodule für Kraftfahrzeuge einschäumen, sind Steckverbindungselemente erforderlich, um dort später die betreffenden Verbraucher anschließen zu können. Vorzugsweise werden diese ebenfalls in der Weise eingeschäumt, daß nur die Öffnung dieses Verbindungselementes, in die später der betreffende korrespondierende Teil eingeführt wird, frei zugänglich bleibt. Beim Einschäumen besteht dann die Gefahr, daß der zunächst sehr dünnflüssige Schaum leicht durch die Öffnung des Körpers des Steckverbindungselementes für die Durchführung der Zuleitungen in den Körper eindringen kann und damit die gesamte Anordnung unbrauchbar macht.

Aus DE 30 48 008 C2 ist ein Verfahren zum Abdichten von in Bauteilen anzubringenden Steckverbindungselementen elektrischer Leitungssysteme bekannt, bei dem eine Umhüllung gespritzt und ein sich konisch verengender Ansatz angeformt wird. Dies erfordert zusätzliche Arbeitsschritte.

Der vorstehend beschriebenen Gefahr soll durch das erfindungsgemäße Verfahren und die dafür erfindungsgemäß einzusetzende Vorrichtung in einfacher Weise begegnet werden.

Gelöst wird das sich danach erfindungsgemäß stellende Problem dadurch, daß man die Eintrittsstelle des elektrischen Leiters in das Steckverbindungselement unter dem Druck des einzubringenden Schaums durch ein Verschlußteil abgedichtet. Dieses Verschlußteil kann zwei gegen einander liegende elastische Lippen, die die elektrische Zuleitung umfassen, aufweisen oder aus einem Bauteil bestehen, das mit der sich nach außen erweitemden Öffnung für die Einführung der Zuleitungen korrespondiert. Beide Lösungen werden anhand der beigefügten Zeichnung näher erläutert.

In diesen Zeichnungen zeigt
- Fig. 1: eine Ausführungsform des Verschlußteils mit dichtenden Lippen
- Fig. 2: eine vergrößerte Teilansicht der Fig. 1
- Fig. 3: eine Draufsicht auf das Verschlußteil gemäß einer Ausführungsform
- Fig. 4: eine Draufsicht auf das Verschlußteil gemäß einer anderen Ausführungsform
- Fig. 5: eine Modifikation des Verschlußteils der Fig. 3 oder 4
- Fig. 6: eine andere Ausführungsform mit dichtendem stopfenartigem Verschlußteil.
- Fig. 7: eine Ausführungsform des Verschlussteils mit umlaufenden Nockenstreifen

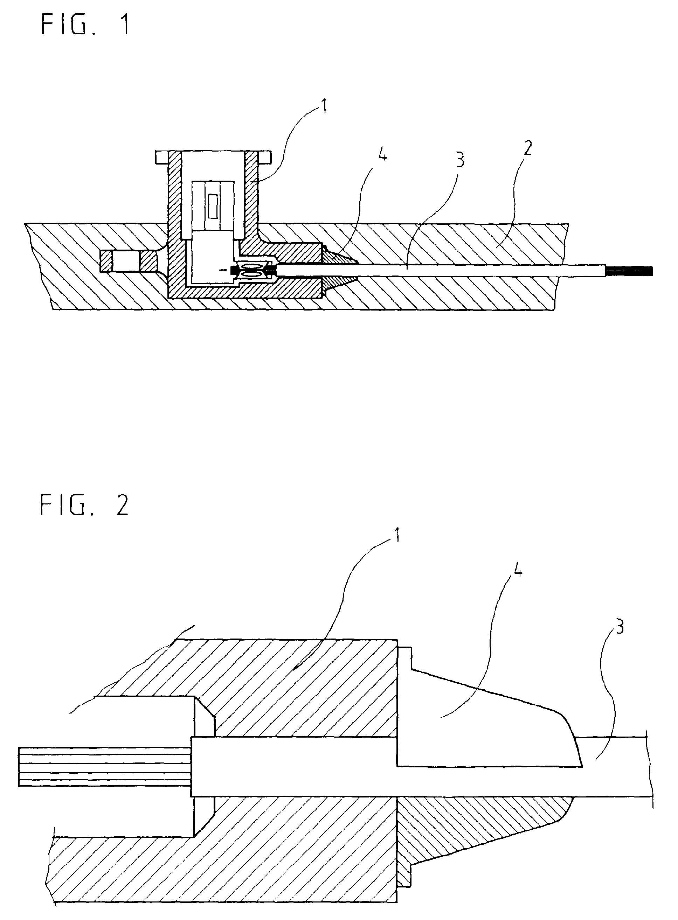

Fig 1 zeigt eine erste Ausführungsform der Erfindung mit einem Steckverbindungselement (1) im Querschnitt, dessen Gestaltung entsprechend dem Einsatzzweck beliebig geformt sein kann und das im Schaum (2) eingeschäumt ist. Dieses Steckverbindungelement weist einerseits (nur angedeutete) Kontakte zum späteren Anschluß eines Verbrauchers und andererseits die Verbindung zu einer Zuleitung (3) auf, die aus einer Einzelleitung oder mehreren elektrischen Einzelleitungen bekannter Art (Rundleiterband, Flachleiterband, Stegleiter oder dergleichen) bestehen kann. Diese Zuleitung (3) wird durch das Verschlußteil (4) geführt, das zwei gegeneinander liegende elastische Lippen aufweist, die die Zuleitung (3) umfassen. Das Verschlußteil (4) kann auf den Körper des Steckverbindungselements aufgesetzt (siehe Fig. 2), an den Körper angespritzt oder in anderer geeigneter Weise mit ihm verbunden sein oder bei geeignetem Material des Körpers einstückig mit ihm hergestellt sein.

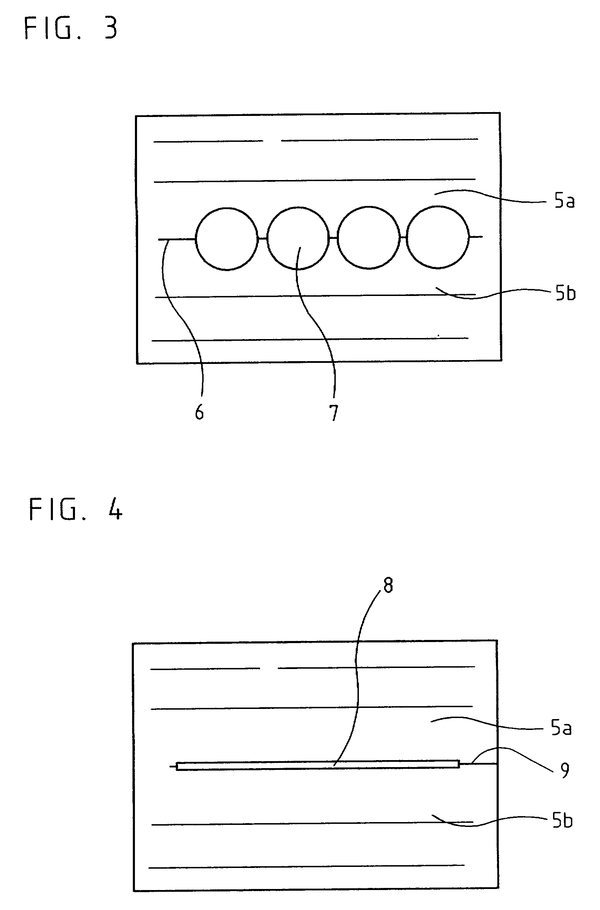

Die Gestaltung der gegeneinander liegenden Lippen hängt von der Art der durchzuführenden Zuleitungen (3) ab. Fig. 3 zeigt eine Ausführungsform in Draufsicht, bei der die Zuleitung (3) eine Stegleitung ist. In diesem Fall weisen die Lippenteile (5a, 5b), die entlang der Linie (6) aufeinandertreffen, dem Querschnitt der Einzeladern der Stegleitung angepaßte Ausschnitte (7) auf.

Wird ein Steckverbindungelement mit einem so gestalteten Verschlußteil (4) in einem Bauteil, wie beispielsweise einer Autotüre eingeschäumt, preßt der sich ausdehnende Schaum die elastischen Lippen (5a, 5b) gegeneinander und in Richtung auf den Körper des Steckverbindungselements (1) und bewirkt einen dichten Abschluß, der das Eindringen von Schaum in diesen Körper verhindert.

Eine andere Gestaltung zeigt Fig. 4 für den Fall, daß die Zuleitung (3) aus einem Flachleiter besteht. Dann müssen die nur einen schmalen Spalt (8) freilassen, wobei die Einführung des Flachleiters dann vorzugsweise dadurch erleichtert wird, daß eine Seite des Verschlußteils (4) eine Schnittöffnung (9) aufweist.

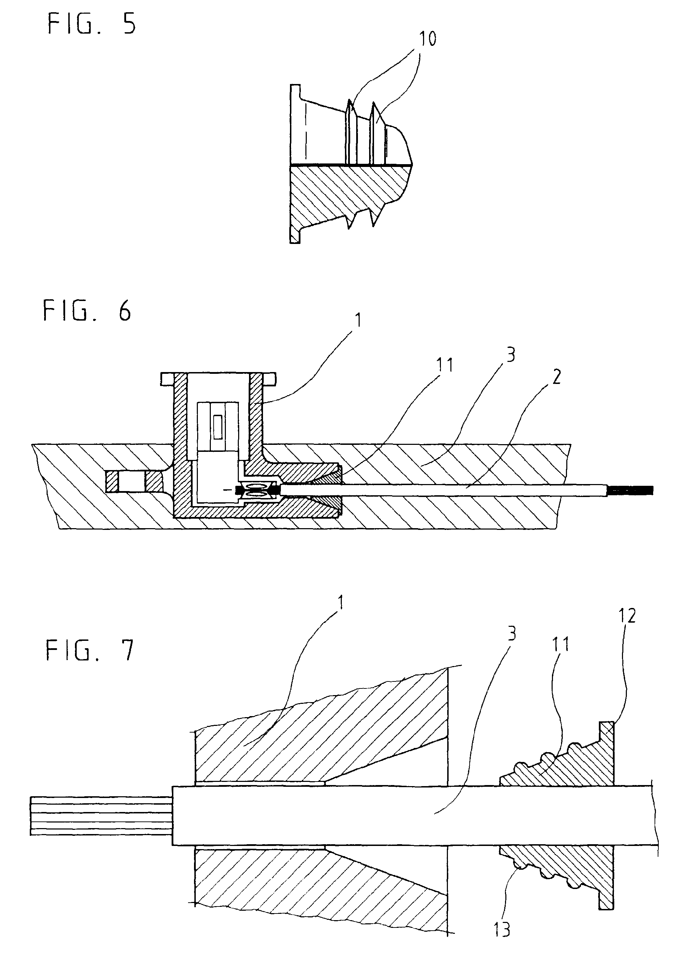

Eine Verstärkung des Anpreßdrucks durch den Schaum kann man dadurch erreichen, daß auf den Lippen Flächenvergrößerungen in Form von Nasen oder zusätzlichen Stegen (10) angebracht sind, wie dies beispielhaft Fig. 5 zeigt.

Eine andere Ausführungsform der erfindungsgemäßen Lösung ist in die Fig. 6 dargestellt, bei der die Öffnung des Steckverbindungselements (1), durch die die Zuleitung (3) eingeführt wird, nach außen im Querschnitt trichterförmig erweitert ist und das aus einem elastischen Material bestehende Verschlußteil (11) eine korrespondierende, sich verjüngende Form aufweist, wie insbesondere Fig. deutlich zeigt. In Anhängigkeit von der Art der einzuführenden Zuleitung (4) kann dieses Verschlußteil (11) die verschiedensten Formen annehmen. Beispielsweise kann das Verschlußteil bei einer Einzelleitung eine kegelförmige Gestalt haben, während für ein Flachleiterband eine längliche, im Querschnitt senkrecht zur Leitungsrichtung rechteckige Gestaltung mit sich verjüngenden Seiten- und Stirnflächen zum Einsatz kommen kann. Die sich trichterförmig erweiternde Öffnung des Steckverbindungselementes ist dann entsprechend gestaltet.

Eine Verstärkung der Dichtwirkung kann man, wie in Fig. 7 gezeigt, dadurch erreichen, daß man das Verschlußteil mit einem Dichtkragen (12) versieht, der sich dicht auf die Stirnfläche des Steckverbindungselements auflegen kann. Die Abdichtung zwischen dem Verschlußteil (11) und der Zuleitung (3) läßt sich dadurch verbessern, daß man am Verschlußteil umlaufende Nockenstreifen (13) anbringt. Dadurch wird erreicht, daß das elastische Verschlußteil (11) sich in Richtung auf die Zuleitung verformt, wenn das Verschlußteil beim Einschäumen durch den Druck des Schaums in die Öffnung des Steckverbindungselements gepreßt wird.

Für das Verschlußteil gemäß beiden vorstehend beschriebenen Ausführungsformen sowie aller für den Fachmann naheliegenden Modifikationen können die verschiedensten Materialien eingesetzt werden, wenn diese nur ausreichend elastisch sind oder sich unter dem Druck des sich ausbreitenden Schaums verformen lassen.

## Patentansprüche

1. Verfahren zum Abdichten von in Bauteilen einzuschäumenden Steckverbindungselementen elektrischer Leitungssysteme beim Einschäumen, dadurch gekennzeichnet, daß die Eintrittsstelle der elektrischen Zuleitung (3) in das Steckverbindungselement (1) unter dem Druck des einzubringenden Schaums durch ein elastisch verformbares Verschlußteil (4, 11) abgedichtet wird.

2. Verfahren nach Anspruch 1, dadurch gekennzeichnet, daß das Verschlußteil (4) zwei die elektrische Zuleitung (3) umschließende, gegen einander liegende elastische Lippenteile (5a, 5b) aufweist.

3. Verfahren nach Anspruch 1, dadurch gekennzeichnet, daß das Verschlußteil (11) aus einem den Leiter umfassenden, gegen das Steckverbindungselement konisch zulaufenden Stopfen besteht.

4. In Bauteile einschäumbares Steckverbindungselement für elektrische Leitungssysteme, umfassend
a) den Körper des Steckverbindungselementes (1) mit den notwendigen Kontakten für die elektrischen Zuleitungen (3) und die Steckverbindung und
b) ein unter dem Druck des einzubringenden Schaums den Raum zwischen elektrischer Zuleitung (3) und Körper dicht verschließendes elastisches Verschlußteil (4, 11).

5. Vorrichtung nach Anspruch 4, dadurch gekennzeichnet, daß das Verschlußteil (4) zwei gegeneinanderliegende elastische Lippen (5a, 5b) mit Aussparungen (7, 8) für die durchzuführenden elektrischen Zuleitungen (3) aufweist.

6. Vorrichtung nach Anspruch 5, dadurch gekennzeichnet, daß das Verschlußteil (4) einstückig mit dem Körper des Steckverbindungselementes (1) ausgebildet ist.

7. Vorrichtung nach Anspruch 5, dadurch gekennzeichnet, daß das Verschlußteil (4) mit dem Körper des Steckverbindungselementes (1) verbunden, vorzugsweise an ihn angespritzt ist.

8. Vorrichtung nach Anspruch 5, dadurch gekennzeichnet, daß das Verschlußteil (4) auf den Körper des Steckverbindungselementes dicht aufgesetzt ist.

9. Vorrichtung nach einem der Ansprüche 4 bis 8, dadurch gekennzeichnet, daß die elastischen Lippen (5a, 5b) nahe ihrem Ende Flächenvergrößerungen (10) aufweisen.

10. Vorrichtung nach Anspruch 4, dadurch gekennzeichnet, daß die der Einführung der Zuleitungen dienende Öffnung des Körper des Steckverbindungselementes (1) sich nach außen erweitert und das die Zuleitungen (3) umschließende elastische Verschlußteil (11) eine mit dieser Öffnung korrespondierende Form aufweist.

11. Vorrichtung nach Anspruch 10, dadurch gekennzeichnet, daß das Verschlußteil (11) an seinem der Zuleitungsöffnung entgegengesetzten Ende einen Kragen (12) aufweist.

12. Vorrichtung nach Anspruch 10 oder 11, dadurch gekennzeichnet, daß das Verschlußteil (11) umlaufende Nocken oder Wülste (13) aufweist.
